# EUROPEAN PATENT SPECIFICATION

(11) **EP 3 219 291 B1**
(45) Date of publication and mention of the grant of the patent: **01.01.2025**
(21) Application number: 15859600.7
(22) Date of filing: 06.11.2015
(51) Int. Cl.: A61C 15/02, A46B 9/02, A46B 9/04, A46B 15/00, A46B 5/00

(54) **INTERDENTAL CLEANING DEVICE**
INTERDENTALES REINIGUNGSWERKZEUG
DISPOSITIF DE NETTOYAGE INTERDENTAIRE

(30) Priority: 11.11.2014 JP 2014229294
(43) Date of publication of application: 20.09.2017
(73) Proprietor: SUNSTAR INC., Takatsuki-shi, Osaka 569-1195 (JP)
(72) Inventor: GENGYO, Anri, Takatsuki-shi Osaka 569-1195 (JP); KATO, Keisuke, Takatsuki-shi Osaka 569-1195 (JP)
(74) Representative: Vossius & Partner Patentanwälte Rechtsanwälte mbB
(86) International application number: PCT/JP2015/081398
(87) International publication number: WO 2016/076241

(56) References cited:
- WO-A1-2009/150964
- WO-A1-2014/005659
- WO-A1-2014/054011
- WO-A1-2014/065368
- WO-A1-2014/167592
- JP-A- 2003 245 287
- JP-A- 2013 188 299
- US-A- 5 775 346
- US-A1- 2010 024 839
- US-A1- 2014 166 043

## Description

### TECHNICAL FIELD

The present invention relates to an interdental cleaning device for cleaning interdental spaces.

### BACKGROUND ART

An interdental cleaning device (interdental brush) used widely includes a core portion composed of twisted two thin metal wires; and a brush portion having filaments fixed between the two thin wires. However, the metal wires tend to easily hurt the teeth and gum when inserted into interdental spaces. Thus, various other interdental cleaning devices are proposed and commercialized, which have a synthetic resin core portion; a cleaning soft portion that is made of an elastomer and molded to cover a front end portion of the core portion; and a gripping portion provided at the rear end of the core portion, in which the core portion and the cleaning soft portion form a cleaning portion to be inserted between teeth (see, for example, Patent Literature 1).

### CITATIONS LIST

### Patent Literature

Patent Literature 1: Japanese Unexamined Patent Application Publication No. 2000-24009, Patent Literature 2 : WO 2014/065368 A1,
Patent literature 3: JP 2013 188299 A,
Patent literature 4: US 2014/166043 A1,
Patent literature 5: WO 2014/054011 A1.

### SUMMARY OF INVENTION

### TECHNICAL PROBLEMS

When the interdental cleaning device described in Patent Literature 1 is used to clean spaces between molar teeth, it must be inserted obliquely into the spaces between the molar teeth because the cheek obstructs its insertion from the cheek side.

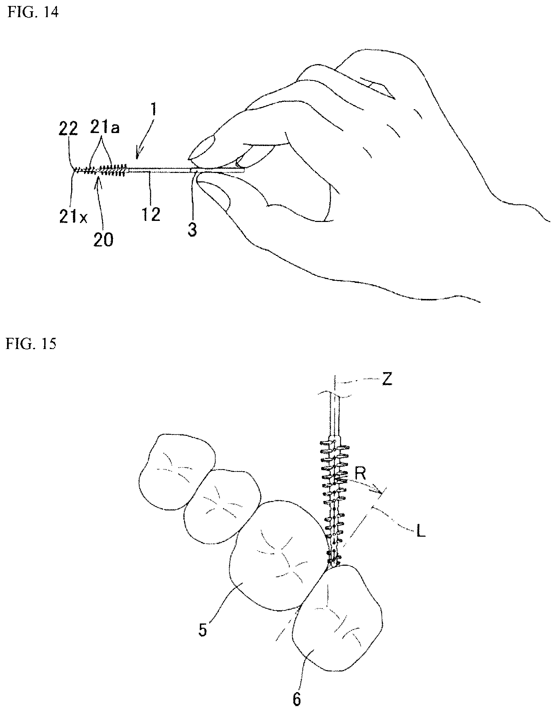

Therefore, for example, as illustrated in FIG. 15, the central axis Z of the interdental cleaning device must make an angle R of 30° to 50° with the extended line L from the space between the molar teeth. In the process of cleaning the space between the molar teeth, the interdental cleaning device is pushed obliquely against the molar teeth in this way, so that the brush portion is elastically deformed and then inserted into the space between the teeth. An interdental device is also disclosed in Patent literature 2, 3, 4 and 5.

Unfortunately, since the synthetic resin is less flexible than metal wires, the interdental cleaning device can fail to be inserted between molar teeth, depending on how the interdental cleaning device is in contact with the molar teeth or how the user applies a force, so that the cleaning soft portion or the synthetic resin core portion may break or buckle due to the interference from the molar teeth.

It is an object of the present invention to provide an interdental cleaning device that is configured to reduce the possibility of breakage in the process of insertion between molar teeth.

### SOLUTIONS TO PROBLEMS

The present invention is directed to an interdental cleaning device for being inserted into an interdental space to clean the interdental space, the interdental cleaning device including: a rod-shaped core portion; and and a molded soft portion being softer than the core portion and covering an outer surface of at least a part of the core portion, the part including a core front end as a longitudinal front end of the core portion, wherein the soft portion has a partial length of 0.5 mm or more and of 2.0 mm or less between the core front end and a soft front end as a longitudinal front end of the soft portion, the soft portion has a plurality of protrusions that are formed to protrude in directions crossing an axial direction of the core portion, at least one of the protrusions is formed in a region between the core front end and the soft front end, and a longitudinal distance between the soft front end and a junction rear end of the protrusion at a position closest to the soft front end is equal to or less than the length between the core front end and the soft front end.

According to these features, the region between the core front end and the soft front end as the front end of the soft portion has no core portion and is flexibly bendable. Therefore, when the user intendeds to insert the interdental cleaning device between molar teeth, the user can easily direct the front end of the interdental cleaning device to the space between the molar teeth because the user can deform and bend the non-core portion of the soft portion by further pushing the interdental cleaning device from the position where the front end is in contact with the molar tooth surface. When the user further pushes the interdental cleaning device with its front end facing to the space between the molar teeth, the core front end is directed to the space between the teeth by the front end facing to the space between the teeth, before the core front end comes into contact with the tooth surface through the soft portion, so that the interdental cleaning device is guided and smoothly inserted between the teeth. As a result, the force applied by the user to push the interdental cleaning device is converted into a driving force in the direction of insertion of the interdental cleaning device, which can reduce the possibility of application of excessive pressure to the interdental cleaning device and thus reduce the possibility of breakage of the interdental cleaning device in the process of inserting the interdental cleaning device between the molar teeth.

The soft portion has a partial length of 2.0 mm or less between the core front end and the soft front end.

As the soft portion has a partial length of 2.0 mm or less between the core front end and the soft front end, the soft portion is less likely to be bent in a U-shape, so that the soft portion can easily guide the interdental cleaning device to the interdental space.

The soft portion preferably has a partial length of 0.7 mm or more between the core front end and the soft front end.

When the soft portion has a partial length of 0.7 mm or more between the core front end and the soft front end, the soft portion can more effectively guide the interdental cleaning device to the interdental space, so that the possibility of breakage of the interdental cleaning device can be more reduced in the process of inserting the interdental cleaning device between molar teeth, than when the soft portion has a partial length of less than 0.7 mm between the core front end and the soft front end.

In addition, the soft portion preferably has a partial length of 1.5 mm or less between the core front end and the soft front end.

When the soft portion has a partial length of 1.5 mm or less between the core front end and the soft front end, the possibility that the soft portion will be bent into a U-shape and fail to be directed to the interdental space can be more reduced, so that the soft portion can more easily guide the interdental cleaning device to the interdental space, than when the soft portion has a partial length of more than 1.5 mm between the core front end and the soft front end.

In addition, the soft portion is preferably an elastomer with a Shore hardness of A30 to A50.

According to this feature, the soft portion has a hardness suitable for the guidance of the interdental cleaning device when the soft portion at the front end of the interdental cleaning device is directed to the interdental space.

In addition, a ratio of the partial length of the soft portion between the core front end and the soft front end to a thickness of the soft portion at the core front end is preferably in a range of 0.5 to 2.5.

According to this feature, the non-core portion of the soft portion can be easily deformed and bent, so that the front end of the interdental cleaning device can be easily directed to the interdental space.

In addition, the ratio of the partial length of the soft portion between the core front end and the soft front end to the thickness of the soft portion at the core front end is preferably in the range of 0.7 to 2.1. Taking into account significant figures, 0.7 represents a number in the range of 0.65 to 0.74, and 2.1 represents a number in the range of 2.05 to 2.14. Preferably, therefore, the ratio of the partial length of the soft portion between the core front end and the soft front end to the thickness of the soft portion at the core front end is substantially in the range of 0.65 to 2.14.

According to this feature, the non-core portion of the soft portion can be easily deformed and bent, so that the front end of the interdental cleaning device can be easily directed to the interdental space.

In addition, the soft portion has a plurality of protrusions that are formed to protrude in directions crossing an axial direction of the core portion, and at least one of the protrusions is preferably formed in a region between the core front end and the soft front end.

According to these features, when the front end of the interdental cleaning device is directed to the interdental space, the protrusion will come into contact with the tooth surface to inhibit adhesion of the front end surface of the interdental cleaning device to the tooth surface. As a result, the front end of the interdental cleaning device directed to the interdental space can easily slip into the interdental space.

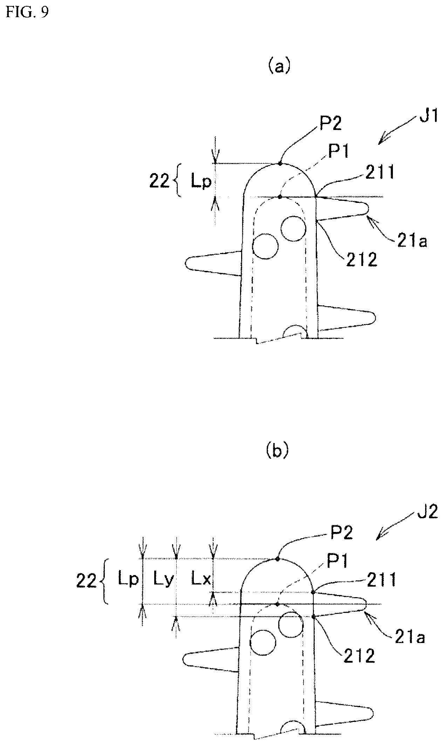

In addition, the soft portion has a plurality of protrusions that are formed to protrude in directions crossing an axial direction of the core portion, and a longitudinal distance (e.g., a distance Lx in FIG. 9(b)) between the soft front end and a junction front end (e.g., a junction front end 211 in FIG. 9(b)) as a frontmost end of junction between the soft portion and at least one of the protrusions (e.g., a protrusion 21a in FIG. 9(b)) is preferably equal to or less than a length between the core front end and the soft front end (e.g., a length Lp in FIG. 9(b)).

According to these features, when the front end of the interdental cleaning device is directed to the interdental space, the protrusion will come into contact with the tooth surface to inhibit adhesion of the front end surface of the interdental cleaning device to the tooth surface. As a result, the front end of the interdental cleaning device directed to the interdental space can easily slip into the interdental space.

In addition, among the protrusions, a protrusion at a position closest to the soft front end is preferably formed entirely in a region between the core front end and the soft front end.

According to this feature, when the front end of the interdental cleaning device is directed to the interdental space, the protrusion will come into contact with the tooth surface to further inhibit adhesion of the front end surface of the interdental cleaning device to the tooth surface. As a result, the front end of the interdental cleaning device directed to the interdental space can more easily slip into the interdental space.

In addition, the interdental cleaning device preferably further includes a handle portion being connected to a rear end of the core portion and having a flat plate shape, wherein among the protrusions, a protrusion at a position closest to the soft front end preferably protrudes in a direction crossing an axial direction of the core portion and being along an in-plane direction of the handle portion.

According to these features, when the user grips the interdental cleaning device by pinching the handle portion between the thumb and index finger, the protrusion at a position closest to the soft front end can be positioned to protrude in the horizontal direction. When the user grips the interdental cleaning device in this position and inserts it between teeth, the protrusion directed in the horizontal direction will come into contact with the tooth side surface. As a result, the front end surface of the interdental cleaning device is less likely to adhere to the tooth so that the front end of the interdental cleaning device can easily slip into the interdental space.

### ADVANTAGEOUS EFFECTS OF INVENTION

The features of the interdental cleaning device described above can successfully reduce the possibility of breakage of the interdental cleaning device in the process of insertion into spaces between molar teeth.

### BRIEF DESCRIPTION OF DRAWINGS

FIG. 1 is a front view of an interdental cleaning device chain having a plurality of interdental cleaning devices according to an embodiment of the present invention connected to one another.
FIGS. 2(a) and 2(b) are partially enlarged views of the interdental cleaning device chain shown in FIG. 1, in which FIG. 2(a) is a front view and FIG. 2(b) is a side view.
FIG. 3 is an enlarged view mainly illustrating the cleaning portion of the interdental cleaning device in an enlarged manner.
FIG. 4 is a IV-IV line cross-sectional view of the cleaning portion illustrated in FIG. 3.
FIG. 5 is an explanatory view for illustrating the effect of the soft guide portion illustrated in FIG. 3.
FIG. 6 is an explanatory view for illustrating the effect of the soft guide portion illustrated in FIG. 3.
FIG. 7 is an explanatory view for illustrating the effect of the soft guide portion illustrated in FIG. 3.
FIG. 8 is a cross-sectional view schematically illustrating the structure of a front end area of each of Examples 1 to 5 and Comparative Examples 1 to 3.
FIGS. 9(a) and 9(b) are partially enlarged views of front end areas of examples shown in FIG. 8.
FIG. 10 is an explanatory view for illustrating the features of a soft guide portion.
FIG. 11 is an enlarged view of the interdental cleaning device shown in FIG. 2(a).
FIG. 12 is an explanatory view for illustrating the features of a protrusion.
FIG. 13 is an explanatory view for illustrating the features of a protrusion.
FIG. 14 is an explanatory view for illustrating the position of an interdental cleaning device with its handle base portion gripped by the user.
FIG. 15 is an explanatory view for illustrating a problem to be solved.

### DESCRIPTION OF EMBODIMENTS

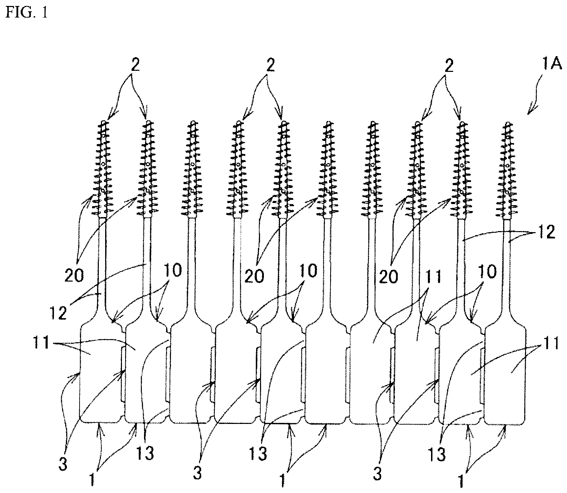

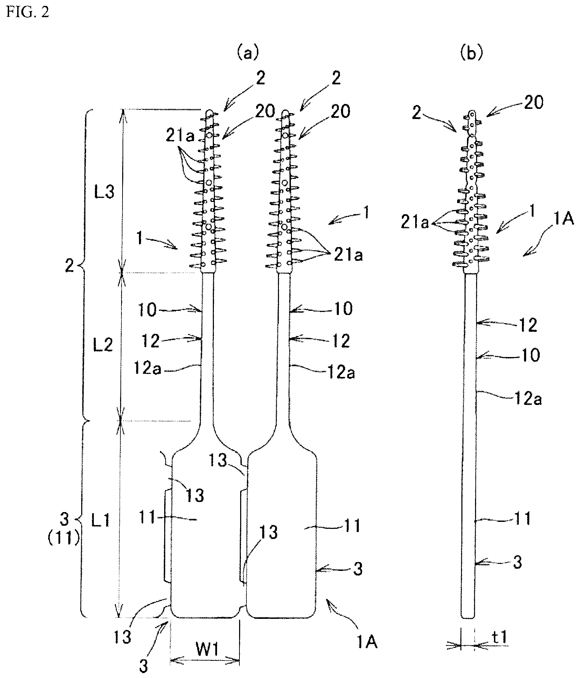

Hereinafter, embodiments of the present invention will be described with reference to the drawings. Note that in the respective drawings, the same elements are denoted by the same reference signs, and a repeated description thereof will be omitted. FIG. 1 is a front view of an interdental cleaning device chain 1A having a plurality of interdental cleaning devices 1 according to an embodiment of the present invention connected to one another. The interdental cleaning device chain 1A illustrated in FIG. 1 includes a plurality of interdental cleaning devices 1 connected integrally to one another. FIGS. 2(a) and 2(b) are partially enlarged views of the interdental cleaning device chain 1A illustrated in FIG. 1. FIG. 2(a) illustrates the front view, and FIG. 2(b) illustrates the side view.

The interdental cleaning device 1 illustrated in FIGS. 2(a) and 2(b) includes a cleaning portion 2 for interdental cleaning and a handle portion 3 connected as a grip to the cleaning portion 2, which are distinguishable in terms of function. The interdental cleaning device 1 also includes a base portion 10 including a synthetic resin having elasticity and a soft portion 20 including, for example, a thermoplastic elastomer softer than the base portion 10, which are distinguishable in terms of material.

The soft portion 20 includes an elastic material, such as an elastomer, having a Shore hardness ofA30 to A50. Examples of the elastomer that can be used to form the soft portion 20 include thermoplastic elastomers such as styrene elastomers, olefin elastomers, and polyamide elastomers; and thermosetting elastomers such as silicone rubbers, urethane rubbers, fluororubbers, natural rubbers, and synthetic rubbers. Particularly in view of safety of the material for use in oral cavity, the soft portion 20 preferably includes a polyolefin or styrene thermoplastic elastomer or a silicone rubber. Also in view of compatibility with the synthetic resin material used to form the base portion 10, the soft portion 20 more preferably includes a polyolefin or styrene thermoplastic elastomer, for example, when the base portion 10 includes polypropylene as described below.

As illustrated in FIG. 1, the interdental cleaning devices 1 are separably connected in parallel by means of connecting portions 13 to form the interdental cleaning device chain 1A. The user will use each interdental cleaning device 1 by disconnecting one by one the interdental cleaning devices 1 at the connecting portions 13 from one side of the interdental cleaning device chain 1A. Although FIG. 1 illustrates that 10 interdental cleaning devices 1 are connected in parallel to form the interdental cleaning device chain 1A, any number of interdental cleaning devices 1 may be connected to form the interdental cleaning device chain 1A. The interdental cleaning device chain 1A including the interdental cleaning devices 1 is also a non-limiting example. Alternatively, the interdental cleaning devices 1 may be each independently formed.

The base portion 10 is made of, for example, a mixture of fibers and synthetic resin. As illustrated in FIGS. 2(a) and 2(b), the base portion 10 includes a handle base portion 11 (handle portion 3) that has a flat slender plate shape and forms a handle portion 3; a core base portion 12 (core portion) that is connected to the front end of the handle base portion 11 and has a rod shape (shaft shape); and connecting portions 13 separably connecting the adjacent handle base portions 11.

The handle base portion 11 is formed in a flat slender plate shape. Alternatively, the handle base portion 11 may be formed in any shape other than the flat slender plate shape, such as a rod shape with a circular, elliptical, polygonal, or other cross-sectional shape, as long as it has a shape for facilitating the gripping by hand and the interdental cleaning. The front end portion of the handle base portion 11 becomes narrower in width toward the core base portion 12 side, and is smoothly connected to the core base portion 12. The handle base portion 11 may have any dimensions capable of facilitating the gripping by hand and the interdental cleaning. For example, the handle base portion 11 has a length L1 of 10 mm to 25 mm, a width W1 of 3.0 mm to 10 mm, and a gripping portion thickness t1 of 0.8 mm to 5.0 mm.

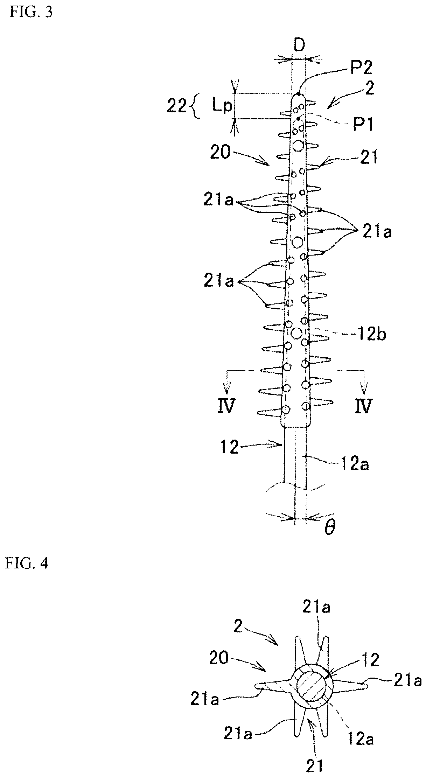

FIG. 3 is an enlarged view mainly illustrating the cleaning portion 2 in an enlarged manner. The cleaning portion 2 includes a core base portion 12 and a soft portion 20 covering the outer surface of at least a part of the core base portion 12, in which the part includes a core front end P1 as the front end of the core base portion 12. The core base portion 12 is formed in a substantially-linear, slender rod shape (shaft shape). Hereinafter, the soft portion 20-covered portion of the core base portion 12 is called a core main body 12b, and the portion of the core base portion 12 exposed to the outside on the handle (gripping portion) side is called an exposed portion 12a. The core base portion 12 is gently tapered to decrease in diameter toward the front end side.

In view of handleability, a length L2 of the exposed portion 12a is typically from 10 mm to 50 mm, preferably from 10 mm to 25 mm, which is from the end of the rounded portion (curved portion) of the front end side surface of the handle base portion 11 narrower in width to the base end of the soft portion 20. In view of the ability to clean the space between teeth, a length L3 of the soft portion 20 is, for example, from 9 mm to 22 mm.

In view of insertability into the space between teeth, the tapered surface makes an angle θ of 0.2° to 1.8° with the central line of the core base portion 12. The front end portion of the core main body 12b has a diameter of 0.3 mm to 0.6 mm. The base end portion of the core main body 12b has a diameter of 0.8 mm to 2.0 mm. The soft portion 20 (cleaning portion 2) has a soft front end P2 as its front end. The curved surface end of the soft front end P2 has a diameter D of 0.5 to 1.2 mm, preferably 0.5 to 1.0 mm, more preferably 0.5 to 0.8 mm. The core main body 12b is so formed that its front end portion extending at least 5 mm from its front end is reliably insertable between teeth.

In this case, the angle θ of the tapered surface of the core base portion 12 is constant over the entire length of the core base portion 12. Alternatively, however, the angle θ may be continuously or gradually reduced toward the front end side of the core base portion 12. In addition, the exposed portion 12a may be formed in a shaft shape with a constant diameter over its entire length, and only the core main body 12b may be gently tapered to decrease in diameter toward the front end side. Alternatively, the exposed portion 12a may also be omitted, and the core main body 12b may be connected directly to the handle base portion 11.

If the soft portion 20 covering the surface of the core base portion 12 is too thick, the core main body 12b must have a small diameter for insertion between teeth. This is not preferred because not only the cleaning portion can have significantly reduced stiffness during the insertion between teeth but also Karman vortices can easily form and have a significant effect during the molding of the cleaning portion 2. On the other hand, if the soft portion 20 is too thin, it may be impossible to charge the elastomeric material until the base end portion of the cleaning portion 2 can be completed. Therefore, the thickness of the soft portion 20 is preferably from 0.1 mm to 0.3 mm.

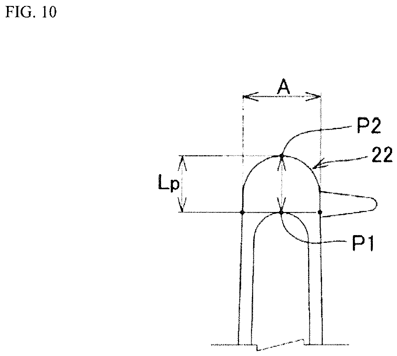

FIG. 10 is an explanatory view for illustrating the features of a soft guide portion 22. The soft portion 20 has a partial length Lp of 0.5 mm or more (substantially 0.45 mm or more, taking into account significant figures), more preferably 0.7 mm or more, between the core front end P1 and the soft front end P2. The length Lp is also 2.0 mm or less, more preferably 1.5 mm or less. The portion extending the length Lp from the soft front end P2 of the cleaning portion 2 is simply a portion of the soft portion 20, which does not contain the core base portion 12. Hereinafter, the portion extending the length Lp from the soft front end P2 is referred to as a soft guide portion 22. The soft guide portion 22, which does not contain the core base portion 12, is easy to bend.

The soft guide portion 22 preferably has a thickness (diameter) A of, for example, about 0.7 mm to about 1.0 mm at the position of the core front end P1, and preferably has a ratio (Lp/A) of the length Lp to the thickness A of about 0.5 to about 2.5, more preferably about 0.7 to about 2.1 (substantially 0.65 to 2.14 taking into account significant figures).

FIG. 4 is a IV-IV line cross-sectional view of the cleaning portion 2 illustrated in FIG. 3. The soft portion 20 has a plurality of protrusions 21a that are formed to protrude to the outside and spaced apart from one another in the longitudinal direction (axial direction) of the cleaning portion 2. The protrusions 21a are formed apart from one another in the longitudinal direction of the soft portion 20 and also arranged apart from one another in the circumferential direction of the soft portion 20. In addition, at least one of the protrusions 21a is formed in the soft guide portion 22.

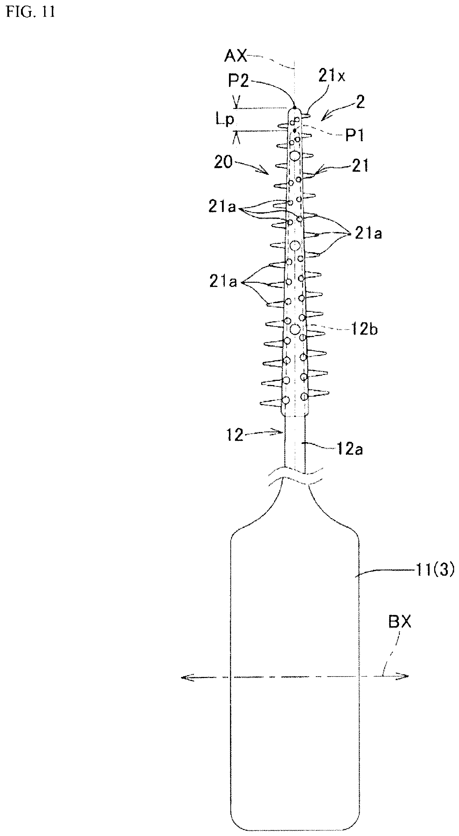

FIG. 11 is an enlarged view of the interdental cleaning device 1 illustrated in FIG. 2(a). As illustrated in FIG. 11, among the protrusions 21a, a protrusion 21x at a position closest to the top, in other words, at a position closest to the soft front end P2, protrudes in a direction crossing the direction of an axis AX of the core base portion 12 and being along an in-plane direction BX parallel to the surface of the handle base portion 11 (handle portion 3). The protrusion 21x is a non-limiting example and does not always have to protrude in a direction crossing the direction of the axis AX of the core base portion 12 and being along the in-plane direction BX parallel to the surface of the handle base portion 11 (handle portion 3).

In a preferred mode, therefore, the soft portion has a plurality of protrusions that are formed to protrude in directions crossing the axial direction of the core portion, in which at least one of the protrusions is formed in a region between the core front end and the soft front end.

According to these features, when the front end of the interdental cleaning device is directed to the space between molar teeth, the protrusion can come into contact with the surface of the molar teeth, so that the front end surface of the interdental cleaning device is less likely to adhere to the surface of the molar teeth. As a result, the front end of the interdental cleaning device directed to the space between the molar teeth can easily slip into the space between the molar teeth.

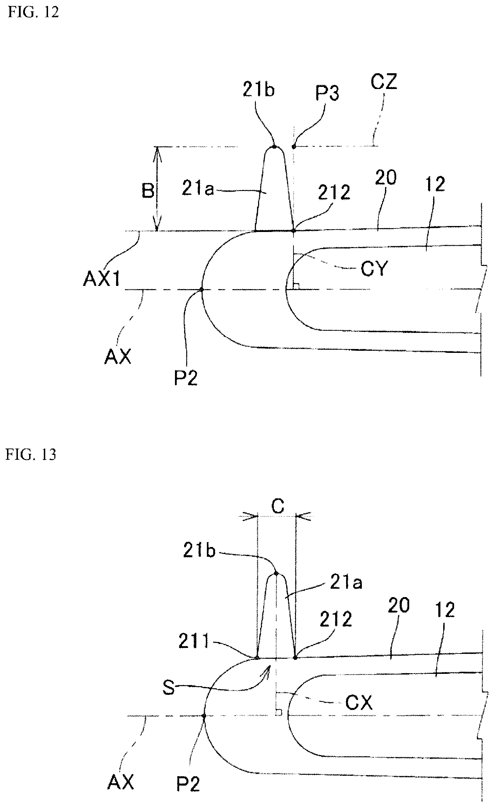

FIGS. 12 and 13 are explanatory views for illustrating the features of the protrusion 21a.

The cross-sectional area S of the base end of the protrusion 21a, the length B and number of the protrusions 21a, and the pitch at which the protrusions 21a are arranged may be selected freely. In view of the ability to be molded or the cleaning ability, the cross-sectional area S of the base end of the protrusion 21a is preferably from about 0.03 mm² to about 1.5 mm², the length B of the protrusion 21a is preferably from about 0.1 mm to about 2.0 mm, the number of the protrusions 21a is preferably from 20 to 100, and the protrusions 21a are preferably arranged at a pitch of 0.1 mm to 1.5 mm. In this example, the protrusions 21a used have a conical shape. Alternatively, protrusions having a tapered axially-flat plate shape may also be used. In addition, the cross-section of the protrusions 21a may have a circular shape or any other shape such as an ellipse or a polygon.

Referring to FIG. 12, the length B is the distance between a junction rear end 212 and a point P3, wherein the junction rear end 212 is the rearmost end of the junction between the protrusion 21a and the soft portion 20, and the point P3 is the point of intersection between lines CY and CZ, wherein the line CY is a perpendicular line passing through the junction rear end 212 and being perpendicular to the axis AX, and the line CZ is an imaginary line passing through the top 21b of the protrusion 21a and extending parallel to the axis AX. Referring to FIG. 13, the cross-sectional area S is the area of the cross-section obtained by cutting the protrusion 21a with a plane extending parallel to the axis AX from the junction rear end 212 and being perpendicular to the line CX corresponding to the shortest distance between the top 21b of the protrusion 21a and the axis AX. The thickness C of the protrusion 21a is the distance between the junction rear end 212 and the junction front end 211, which is the frontmost end of the junction between the protrusion 21a and the soft portion 20.

Examples of synthetic resin materials that can be used to form the base portion 10 include polypropylene (PP), polybutylene terephthalate (PBT), polyethylene, polyethylene terephthalate, polycyclohexylene dimethylene terephthalate, saturated polyester resins, polymethyl methacrylate, cellulose propionate, polyurethane, polyamide, polycarbonate, ABS (acrylonitrile-butadiene-styrene) resins, and other thermoplastic synthetic resin materials. In particular, polypropylene (PP) and polybutylene terephthalate (PBT) are preferred, which can prevent the base portion 10 from buckling. Polypropylene is most preferred, which can be molded at low temperatures, can reduce cycle time and improve productivity, and can be processed with a lower thermal load on the molding facility.

The fibers added to the synthetic resin material for forming the base portion 10 may be, for example, glass fibers, carbon fibers, or aramid fibers. The content of the fibers depends on the synthetic resin material for forming the base portion 10. Basically, the base portion 10 with a fiber content of less than 12% by weight can easily bend so that the cleaning portion 2 can be difficult to insert between teeth, and the base portion 10 with a fiber content of more than 35% by weight can make the cleaning portion 2 buckle easily. Therefore, the content of the fibers in the base portion 10 is preferably 12% by weight or more and 35% by weight or less, more preferably 15% by weight or more and 35% by weight or less, even more preferably 20% by weight or more and 30% by weight or less. Specifically, when polypropylene (PP) is used as the synthetic resin material, the fiber content is preferably 15% by weight or more and 35% by weight or less, and when polybutylene terephthalate (PBT) is used as the synthetic resin material, the fiber content is preferably 12% by weight or more and 35% by weight or less.

The longitudinal direction of the fibers is preferably oriented in a direction along the longitudinal direction of the base portion 10. This feature makes it possible to improve the bending strength or axial buckling strength of the base portion 10 and to effectively prevent the core base portion 12 from bending or buckling during use of the interdental cleaning device 1. When the fibers are oriented in the longitudinal direction of the base portion 10, the connecting portions 13 also have the fibers oriented along the longitudinal direction of the base portion 10, so that the interdental cleaning devices 1 molded in parallel can be cleanly cut off from each other at the connecting portions 13 by turning the interdental cleaning device 1 about the connecting portions 13 in such a manner that the adjacent interdental cleaning devices 1 are placed over each other. The addition of the fibers also improves the dimensional stability of the base portion 10 and increases the strength and stiffness of the base portion 10 so that its deformation is prevented. The fibers can also raise the thermal deformation temperature of the core base portion 12, which makes it possible to effectively prevent the core base portion 12 from being softened and deformed by heat from the elastomeric material during the molding of the soft portion 20. The fibers can also increase the strength and stiffness, which makes it possible to prevent the core base portion 12 from being deformed by the elastomeric material injection pressure and to effectively prevent poor molding of the soft portion 20.

FIG. 14 is an explanatory view for illustrating the position of the interdental cleaning device 1 gripped at the handle portion 3 of the interdental cleaning device 1 by the user. When the user grips the interdental cleaning device 1 by pinching the handle portion 3 between the thumb and index finger, the protrusion 21x at the frontmost end is positioned to protrude in the horizontal direction, because the protrusion 21x protrudes in a direction crossing the direction of the axis AX of the core base portion 12 and being along the in-plane direction BX parallel to the surface of the handle portion 3. When the user grips the interdental cleaning device 1 in this position and inserts it between teeth, the protrusion 21x directed in the horizontal direction will come into contact with the side surface of the tooth. As a result, the soft guide portion 22 is less likely to adhere to the tooth so that the soft guide portion 22 can easily slip into the space between the teeth.

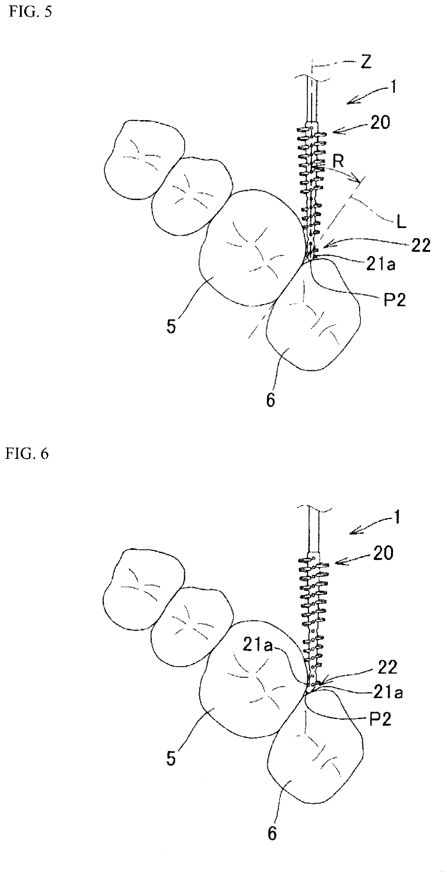

FIGS. 5 to 7 are explanatory views for illustrating the effect of the soft guide portion 22 shown in FIG. 3. FIG. 5 illustrates a state in which the soft front end P2 is in contact with the curved corner surface of a second molar tooth 6 when the user intends to insert the interdental cleaning device 1 into the space between first and second molar teeth 5 and 6. An extended line L from the space between the first and second molar teeth 5 and 6 makes an angle R of 30° to 50° with a central axis Z of the interdental cleaning device 1.

FIG. 6 illustrates a state in which the user is further pushing the interdental cleaning device 1 from the position shown in FIG. 5. When the interdental cleaning device 1 is further pushed from the position where the soft front end P2 is in contact with the curved corner surface of the second molar tooth 6, the soft guide portion 22 is deformed and bent so that the soft front end P2 slips at the curved corner surface of the second molar tooth 6 and thus is directed to the space between the first and second molar teeth 5 and 6. Therefore, the presence of the soft guide portion 22, which does not contain the core base portion 12 and thus is made easily bendable, allows the soft front end P2 to easily bend and face to the space between molar teeth in the process of inserting the interdental cleaning device 1 between the molar teeth.

In addition, the protrusion 21a formed in the soft guide portion 22 can reduce the friction between the soft guide portion 22 and the molar tooth surface. If the protrusion 21a is not formed in the soft guide portion 22, the side surface of the bent soft front end P2 may adhere to the molar tooth surface, so that the soft front end P2 may resist slipping into the interdental space. However, the interdental cleaning device 1 having the protrusion 21a formed in the soft guide portion 22 allows the side surface of the bent soft front end P2 to resist adhesion to the molar tooth surface. As a result, the soft front end P2 facing toward the space between molar teeth can easily slip into the space between them.

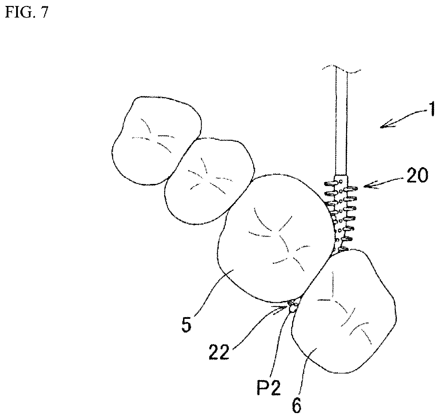

FIG. 7 illustrates a state in which the user further pushes the interdental cleaning device 1 from the position shown in FIG. 6. As illustrated in FIG. 6, when the user further pushes the interdental cleaning device 1 with the soft guide portion 22 being bent and with the soft front end P2 facing toward the space between molar teeth, the soft guide portion 22 slips into the space between the molar teeth, so that the cleaning portion 2 (soft portion 20) guided by the soft guide portion 22 is bent and inserted into the space between the molar teeth.

In this process, the soft portion 20 and the protrusions 21a formed in the soft portion 20 clean the interdental space. As described above, the soft guide portion 22 facing toward the space between molar teeth functions to guide the insertion of the interdental cleaning device 1, so that the cleaning portion 2 formed with the soft portion 20 is smoothly inserted into the interdental space. As a result, the possibility of breakage of the interdental cleaning device 1 can be reduced in the process of inserting the cleaning portion 2 into the space between molar teeth.

In the example shown above, the protrusion 21a is formed in the soft guide portion 22. Alternatively, the protrusion 21a may be absent in the soft guide portion 22. Even in such a case, the soft guide portion 22 with a length Lp of 0.5 mm or more can guide the cleaning portion 2 into the interdental space, so that the possibility of breakage of the interdental cleaning device 1 can be reduced in the process of inserting the cleaning portion 2 into the space between molar teeth.

In addition, the handle portion 3 (handle base portion 11) does not always have a flat plate shape. Alternatively, it may have, for example, a columnar shape such as a cylindrical shape or a polygonal prism shape. However, when the handle portion 3 has a flat plate shape, the user can grip the handle portion 3 with the thumb and index finger as illustrated in FIG. 14, which increases the reliability of the contact between the protrusion 21x and the tooth surface during the insertion of the interdental cleaning device 1 into the interdental space and also increases the reliability of the easy slipping of the soft guide portion 22 into the space. From these points, the handle portion 3 should preferably have a flat plate shape.

### <Evaluation test>

Next, a test for evaluating the interdental cleaning device 1 will be described. A plurality of samples of the interdental cleaning device 1 shown in FIGS. 1 to 4 were prepared which differed in the partial length Lp of the soft portion 20 between the core front end P1 and the soft front end P2. Each sample was subjected to an evaluation test. Tables 1 and 2 show the results of the evaluation test.

Samples with the length Lp ranging from 0.5 mm to 2.0 mm were prepared in Examples 1 to 5. Samples with the length Lp being less than 0.5 mm were prepared in Comparative Example 1, and samples with the length Lp exceeding 2.0 mm were prepared in Comparative Examples 2 and 3. For reference purposes, the base portion 10 was made of an elastomer, and samples of the interdental cleaning device 1 with the same shape were made of only the elastomer and then also subjected to the evaluation test. Specifically, the length Lp is 0.2 mm in Comparative Example 1, 0.5 mm in Example 1, 0.7 mm in Example 2, 1.0 mm in Example 3, 1.5 mm in Example 4, 2.0 mm in Example 5, 2.5 mm in Comparative Example 2, and 3.0 mm in Comparative Example 3, and samples with the same shape as the interdental cleaning device 1 were made of only the elastomer in Comparative Example 4.

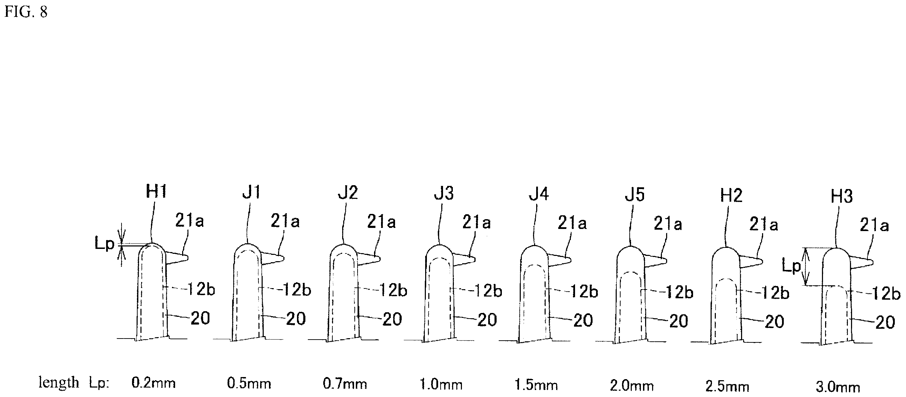

FIG. 8 is a cross-sectional view schematically illustrating the structure of the front end area of each of the samples of Examples 1 to 5 (J1 to J5) and Comparative Examples 1 to 3 (H1 to H3). Among the protrusions 21a, only one closest to the front end is shown in FIG. 8 for each of Examples 1 to 5 (Jl to J5) and Comparative Examples 1 to 3 (H1 to H3). FIG. 9(a) is a partially enlarged view of the front end area of Example 1 (J1) illustrated in FIG. 8. In the interdental cleaning device 1 of Example 1 (J1), the longitudinal distance between the soft front end P2 and the junction front end 211, which is the frontmost end of the junction between the soft portion 20 and the protrusion 21a closest to the front end, is equal to the length Lp.

FIG. 9(b) is a partially enlarged view of the front end area of Example 2 (J2) shown in FIG. 8. In the interdental cleaning device 1 of Example 2 (J2), the longitudinal distance between the soft front end P2 and the junction front end 211, which is the frontmost end of the junction between the soft portion 20 and the protrusion 21a closest to the front end, is shorter than the length Lp, and the longitudinal distance between the soft front end P2 and the junction rear end 212, which is the rearmost end of the junction between the soft portion 20 and the protrusion 21a closest to the front end, is longer than the length Lp. In other words, the core front end P1 is longitudinally located between the junction front end 211 and the junction rear end 212.

FIG. 3 shows an example where the protrusion 21a is entirely formed in the soft guide portion 22, in other words, the longitudinal distances between the soft front end P2 and the junction front end 211 and between the soft front end P2 and the junction rear end 212 are both equal to or shorter than the length Lp. However, as in Example 1 (J1) or Example 2 (J2), the longitudinal distance between the soft front end P2 and the junction front end 211 may be equal to or shorter than the length Lp whereas the longitudinal distance between the soft front end P2 and the junction rear end 212 may exceeds the length Lp.

In Example 2 (J2) shown in FIG. 9(b), a longitudinal distance Lx between the soft front end P2 and the junction front end 211 is less than the length Lp, and a longitudinal distance Ly between the soft front end P2 and the junction rear end 212 is more than the length Lp. Example 2 (J2), in which the protrusion 21a is formed partially in the soft guide portion 22, is a case where the protrusion 21a is formed in the soft guide portion 22.

The protrusion 21a closest to the front end is more preferably formed entirely in the soft guide portion 22, in other words, the longitudinal distance between the soft front end P2 and the junction rear end 212 of the protrusion 21a closest to the front end is more preferably equal to or less than the length Lp. In the case where the protrusion 21a closest to the front end is formed entirely in the soft guide portion 22, the protrusion 21a closest to the front end can come into contact with the molar tooth surface when the soft guide portion 22 is directed to the space between the molar teeth, so that the surface of the soft guide portion 22 can be prevented, with improved reliability, from adhering to the molar tooth surface.

In the examples shown above, one protrusion 21a is formed in the soft guide portion 22. Alternatively, two, three, or more protrusions 21a may be formed in the soft guide portion 22.

In the example of FIG. 8, the core main body 12b is shown thick for the sake of clarity. However, since the front end portion of the core main body 12b has a diameter of, for example, 0.35 mm to 0.6 mm as mentioned above, the length Lp in Example 1 (J1) is actually almost equal to or larger than the diameter of the front end portion of the core main body 12b.

Each sample was also subjected to an evaluation test in which the interdental cleaning device 1 was inserted between teeth under different conditions including three insertion angles R: 30°, 40°, and 50° and two insertion rates: 30 mm/min and 200 mm/min. The test was performed on three samples of each type (n = 3). For example, three samples of Example 1 were prepared for carrying out the test under each of six sets (in total) of conditions including insertion at a rate of 30 mm/min and an insertion angle R of 30°, 40°, or 50° and insertion at a rate of 200 mm/min and an insertion angle R of 30°, 40°, or 50°. Therefore, 18 samples of Example 1 were used in total. Similarly, 18 samples of each of other examples and comparative examples were used in the test.

The evaluation test was performed as follows. Using a compression tester, the soft front end P2 of the interdental cleaning device 1 was pushed, as illustrated in FIG. 5, at an angle R against the interdental area between the first and second molar teeth 5 and 6 of a jaw model. The interdental cleaning device 1 was then pushed into the space between the molar teeth at a constant insertion rate, and it was observed whether or not the interdental cleaning device 1 broke.

Table 1 shows the test results at the insertion rate of 30 mm/min, and Table 2 shows the test results at the insertion rate of 200 mm/min. In Tables 1 and 2, the term "excellent" indicates that the interdental cleaning device 1 was neither broken nor deformed. The term "good" indicates that breakage of the interdental cleaning device 1, rupture of the soft portion 20, or any other breakage did not occur, but deformation of the interdental cleaning device 1 occurred. The term "unacceptable" indicates that breakage occurred such as breakage of the interdental cleaning device 1 or rupture of the soft portion 20.

When the insertion rate was 30 mm/min (Table 1), the test results obtained at insertion angles R of 30° and 40° were "excellent" for all of Examples 1 to 5. When the insertion rate was 200 mm/min (Table 2), the test results obtained at an insertion angle R of 30° were "excellent" for all of Examples 1 to 5. When the insertion rate was 30 mm/min (Table 1), the test results at an insertion angle R of 50° were "good" for Examples 1 and 5 and "excellent" for Examples 2 to 4. When the insertion rate was 200 mm/min (Table 2), the test results at an insertion angle R of 40° were "good" for Example 1 and "excellent" for Examples 2 to 5. When the insertion rate was 200 mm/min (Table 2), the test results at an insertion angle R of 50° were "good" for Examples 1 and 5 and "excellent" for Examples 2 to 4.

As a result, it has been found that in Examples 1 to 5, specifically, when the length Lp is in the range of 0.5 mm to 2.0 mm, "good" or "excellent" results are obtained at all insertion rates 30 mm/min and 200 mm/min and at all insertion angles R 30°, 40°, and 50° and that "excellent" results are obtained for all of Examples 1 to 5 particularly at an insertion rate of 30 mm/min (Table 1) and insertion angles R of 30° and 40° and at an insertion rate of 200 mm/min (Table 2) and an insertion angle R of 30°.

On the other hand, in Comparative Example 1 (Lp = 0.2 mm) where the length Lp is shorter than that in Example 1 (Lp = 0.5 mm), "unacceptable" results are obtained at all insertion angles R 30°, 40°, and 50° at both insertion rates 30 mm/min (Table 1) and 200 mm/min (Table 2). In Comparative Example 1, the soft portion was thin at the front end of the interdental cleaning device, so that the soft portion did not bend even when the front end came into contact with the molar tooth surface, and as a result, the interdental cleaning device broke without being guided into the interdental space when the pressure was applied from the compression tester in such a manner that the interdental cleaning device was pushed against the molar tooth.

However, in Examples 1 to 5 where the length Lp is 0.5 mm or more, when the pressure is further applied from the compression tester to the interdental cleaning device with the soft front end P2 being in contact with the curved corner surface of the second molar tooth 6 (FIG. 5), the soft guide portion 22 is deformed and bent, so that the soft front end P2 slips on the curved corner surface of the second molar tooth 6 to face toward the space between the first and second molar teeth 5 and 6 (FIG. 6), which allows the soft guide portion 22 to slip into the space between the molar teeth, so that the cleaning portion 2 (soft portion 20) guided by the soft guide portion 22 is bent and inserted between the teeth (FIG. 7). In this case, the pressure applied from the compression tester is converted into a driving force for the interdental cleaning device 1 due to the guidance achieved by the soft guide portion 22. Therefore, the pressure applied from the compression tester is prevented from breaking the interdental cleaning device 1.

The test results have demonstrated that 0.5 mm or more about the length Lp in the interdental cleaning device 1 is a significant threshold value for achieving the object of reducing the possibility of breakage of the interdental cleaning device in the process of insertion into the space between molar teeth. In this regard, taking into account significant figures, 0.5 represents a number in the range of 0.45 to 0.54. Therefore, the length Lp should be substantially 0.45 mm or more in the interdental cleaning device 1 according to the present invention.

In Comparative Examples 2 and 3 where the length Lp was 2.5 mm or more and in Comparative Example 4 where the device was entirely made of the elastomer, the results were "unacceptable," except that the results were "good" at an insertion rate of 30 mm/min and an insertion angle R of 30° in Comparative Example 2. Specifically, in Comparative Example 2, the results were "unacceptable" at an insertion rate of 30 mm/min and an insertion angle R of 40° or 50° and at an insertion rate of 200 mm/min and an insertion angle R of 30°, 40°, or 50°. In Comparative Examples 3 and 4, the results were "unacceptable" at all insertion rates and all insertion angles.

In Comparative Examples 2 and 3 where the length Lp was 2.5 mm or more and in Comparative Example 4 where the interdental cleaning device was entirely made of the elastomer, the soft portion had a long soft deformable portion at the front end of the interdental cleaning device, so that the front end of the soft portion was bent into a U-shape and did not face toward the interdental space, and as a result, the interdental cleaning device was not able to be inserted into the interdental space.

On the other hand, in Examples 1 to 5 where the length Lp was 2.0 mm, the interdental cleaning device 1 was inserted into the interdental space so that good test results were obtained. Therefore, it has been demonstrated that 2.0 mm or less about the length Lp in the interdental cleaning device 1 is a significant threshold value for achieving the object of easily inserting the interdental cleaning device into the space between molar teeth.

In Example 1 where the length Lp was 0.5 mm, the test results were "good" at an insertion rate of 30 mm/min and an insertion angle R of 50° and at an insertion rate of 200 mm/min and an insertion angle R of 40° or 50°. On the other hand, in Examples 2, 3, and 4 where the length Lp was 0.7 mm or more, "excellent" test results were obtained at all insertion rates 30 mm/min and 200 mm/min and all insertion angles R 30°, 40°, and 50°.

These test results have demonstrated that better results can be obtained when the length Lp is 0.7 mm or more in the interdental cleaning device 1 than when the length Lp is 0.5 mm or more.

In Example 5 where the length Lp was 2.0 mm, the test results were "good" at an insertion rate of 30 mm/min and an insertion angle R of 50° and at an insertion rate of 200 mm/min and an insertion angle R of 50°. On the other hand, in Examples 2, 3, and 4 where the length Lp was 1.5 mm or less, "excellent" test results were obtained at all insertion rates 30 mm/min and 200 mm/min and all insertion angles R 30°, 40°, and 50°.

These test results have demonstrated that better results can be obtained when the length Lp is 1.5 mm or less in the interdental cleaning device 1 than when the length Lp is 2.0 mm or less.

**[Table 1]**

| Insertion rate: 30 mm/min | | Comparative Example | Example | | | | | Comparative Example | | |
|---|---|---|---|---|---|---|---|---|---|---|
| | | 1 | 1 | 2 | 3 | 4 | 5 | 2 | 3 | 4 |
| Length Lp (mm) | | 0.2 | 0.5 | 0.7 | 1.0 | 1.5 | 2.0 | 2.5 | 3.0 | Entirely made of elastomer |
| Angle R | 30° | Unacceptable | Excellent | Excellent | Excellent | Excellent | Excellent | Good | Unacceptable | Unacceptable |
| | 40° | Unacceptable | Excellent | Excellent | Excellent | Excellent | Excellent | Unacceptable | Unacceptable | Unacceptable |
| | 50° | Unacceptable | Good | Excellent | Excellent | Excellent | Good | Unacceptable | Unacceptable | Unacceptable |
| Reasons | | Breakage before insertion | - | - | - | - | - | Impossible to insert | Impossible to insert | Impossible to insert |

**[Table 2]**

| insertion rate: 200 mm/min | | Comparative Example | Example | | | | | Comparative Example | | |
|---|---|---|---|---|---|---|---|---|---|---|
| | | 1 | 1 | 2 | 3 | 4 | 5 | 2 | 3 | 4 |
| Length Lp (mm) | | 0.2 | 0.5 | 0.7 | 1.0 | 1.5 | 2.0 | 2.5 | 3.0 | Entirely made of elastomer |
| Angle R | 30° | Unacceptable | Excellent | Excellent | Excellent | Excellent | Excellent | Unacceptable | Unacceptable | Unacceptable |
| | 40° | Unacceptable | Good | Excellent | Excellent | Excellent | Excellent | Unacceptable | Unacceptable | Unacceptable |
| | 50° | Unacceptable | Good | Excellent | Excellent | Excellent | Good | Unacceptable | Unacceptable | Unacceptable |
| Reasons | | Breakage before insertion | - | - | - | - | - | Impossible to insert | Impossible to insert | Impossible to insert |

Five testers used the samples of Comparative Example 1 and Examples 1, 2, and 3 for 3 days to clean spaces between their front teeth. Subsequently, the testers determined whether or not the front end portion of each soft portion 20 broke. The test results are shown in Table 3. After use for 3 days by the 5 testers, the front end portion of the soft portion 20 broke to expose the core front end P1 in all the five samples of Comparative Example 1.

On the other hand, after use for 3 days by the 5 testers, no breakage occurred in the soft portion 20 of any of the samples of Examples 1, 2, and 3. This has demonstrated that when the length Lp is 0.5 mm or more, the interdental cleaning device 1 can have improved durability to cleaning between front teeth.

**[Table 3]**

| | Comparative Example | Example | | |
|---|---|---|---|---|
| | 1 | 1 | 2 | 3 |
| Length Lp (mm) | 0.2 | 0.5 | 0.7 | 1.0 |
| Breakage during insertion between teeth | Present | Absent | Absent | Absent |
| Occurrence rate | 515 | 015 | 015 | 015 |

Table 4 shows the actually measured values of the thickness A, length B, thickness C, cross-sectional area S, and ratio (Lp/A) shown in FIGS. 10, 12, and 13 with respect to the interdental cleaning device samples of Examples 1 to 5 and Comparative Examples 1 to 4 described above. As shown in Table 4, the ratio (Lp/A) ranges from 0.7 to 2.1 in Examples 1 to 5. Taking into account significant figures, 0.7 represents a number in the range of 0.65 to 0.74, and 2.1 represents a number in the range of 2.05 to 2.14. Therefore, the ratio (Lp/A) in Examples 1 to 5 is substantially in the range of 0.65 to 2.14.

**[Table 4]**

| | | Comparative Example 1 | Example 1 | Example 2 | Example 3 | Example 4 | Example 5 | Comparative Example 2 | Comparative Example 3 | Comparative Example 4 |
|---|---|---|---|---|---|---|---|---|---|---|
| | Lp | 0.2 | 0.5 | 0.7 | 1 | 1.5 | 2 | 2.5 | 3 | - |
| Measured values (mm) | A | 0.7 | 0.7 | 0.85 | 0.9 | 0.95 | 0.95 | 0.95 | 0.95 | - |
| | B | 0.4 | 0.4 | 0.75 | 0.75 | 1 | 1 | 1 | 1 | 0.4 |
| | C | 0.27 | 0.27 | 0.5 | 0.4 | 0.37 | 0.37 | 0.37 | 0.37 | 0.27 |
| Cross-sectional area S (mm²) | | 0.057 | 0.057 | 0.196 | 0.126 | 0.108 | 0.108 | 0.108 | 0.108 | 0.057 |
| Ratio (Lp/A) | - | 0.3 | 0.7 | 0.8 | 1.1 | 1.6 | 2.1 | 2.6 | 3.2 | - |

### REFERENCE SIGNS LIST

- 1: Interdental cleaning device
- 1A: Interdental cleaning device chain
- 2: Cleaning portion
- 3: Handle portion
- 10: Base portion
- 11: Handle base portion
- 12: Core base portion (core portion)
- 12a: Exposed portion
- 12b: Core main body
- 13: Connecting portion
- 20: Soft portion
- 21a, 21x: Protrusion
- 22: Soft guide portion
- A: Thickness
- AX: Axial direction
- BX: In-plane direction
- L: Extended line
- Lp: Length
- P1: Core front end
- P2: Soft front end
- R: Angle
- W1: Width

## Claims

1. An interdental cleaning device (1) for being inserted into an interdental space to clean the interdental space, the interdental cleaning device (1) comprising:
a rod-shaped core portion (12); and
a molded soft portion (20) being softer than the core portion (12) and covering an outer surface of at least a part of the core portion (12), the part including a core front end (P1) as a longitudinal front end of the core portion (P1), wherein
the soft portion (20) has a partial length of 0.5 mm or more and of 2.0 mm or less between the core front end (P1) and a soft front end (P2) as a longitudinal front end of the soft portion (20),
the soft portion (20) has a plurality of protrusions (21a, 21x) that are formed to protrude in directions crossing an axial direction of the core portion (12),
at least one of the protrusions (21a, 21x) is formed in a region between the core front end (P1) and the soft front end (P2), and
a longitudinal distance between the soft front end (P2) and a junction rear end (212) of the protrusion (21a) at a position closest to the soft front end (P2) is equal to or less than the length between the core front end (P1) and the soft front end (P2).

2. The interdental cleaning device according to claim 1, wherein the soft portion (20) has a partial length of 0.7 mm or more between the core front end (P1) and the soft front end (P2).

3. The interdental cleaning device according to any one of claims 1 to 2, wherein the soft portion (20) has a partial length of 1.5 mm or less between the core front end (P1) and the soft front end (P2).

4. The interdental cleaning device according to any one of claims 1 to 3, wherein the soft portion (20) is an elastomer with a Shore hardness of A30 to A50.

5. The interdental cleaning device according to any one of claims 1 to 4, wherein a ratio of the partial length of the soft portion (20) between the core front end (P1) and the soft front end (P2) to a thickness of the soft portion (20) at the core front end (P1) is in a range of 0.5 to 2.5.

6. The interdental cleaning device according to claim 5, wherein the ratio of the partial length of the soft portion (20) between the core front end (P1) and the soft front end (P2) to the thickness of the soft portion (20) at the core front end (P1) is in a range of 0.7 to 2.1.

7. The interdental cleaning device according to any one of claims 1 to 6, further comprising a handle portion (3) being connected to a rear end of the core portion (12) and having a flat plate shape, wherein
among the protrusions (21a, 21x), a protrusion at a position closest to the soft front end (P2) protrudes in a direction crossing an axial direction of the core portion (12) and being along an in-plane direction of the handle portion (3).

## Patentansprüche

1. Interdentale Reinigungsvorrichtung (1), die in einen interdentalen Raum hineinzubringen ist, um den interdentalen Raum zu reinigen, wobei die interdentale Reinigungsvorrichtung (1) aufweist:
einen stabförmigen Kernabschnitt (12); und
einen geformten weichen Abschnitt (20), der weicher als der Kernabschnitt (12) ist und eine Außenfläche mindestens eines Teils des Kernabschnitts (12) bedeckt, wobei der Teil ein Kernvorderende (P1) als ein Längsvorderende des Kernabschnitts (P1) aufweist, wobei
der weiche Abschnitt (20) eine Teillänge von 0,5 mm oder mehr und von 2,0 mm oder weniger zwischen dem Kernvorderende (P1) und einem weichen Vorderende (P2) als ein Längsvorderende des weichen Abschnitts (20) hat,
der weiche Abschnitt (20) mehrere Vorsprünge (21a, 21x) hat, die gebildet sind, um in Richtungen vorzustehen, die eine Axialrichtung des Kernabschnitts (12) kreuzen,
mindestens einer der Vorsprünge (21a, 21x) in einer Zone zwischen dem Kernvorderende (P1) und dem weichen Vorderende (P2) gebildet ist, und
eine Längsdistanz zwischen dem weichen Vorderende (P2) und einem hinteren Verbindungsende (212) des Vorsprungs (21a) an einer dem weichen Vorderende (P2) nächstgelegenen Position gleich oder kleiner als die Länge zwischen dem Kernvorderende (P1) und dem weichen Vorderende (P2) ist.

2. Interdentale Reinigungsvorrichtung nach Anspruch 1, wobei der weiche Abschnitt (20) eine Teillänge von 0,7 mm oder mehr zwischen dem Kernvorderende (P1) und dem weichen Vorderende (P2) hat.

3. Interdentale Reinigungsvorrichtung nach einem der Ansprüche 1 bis 2, wobei der der weiche Abschnitt (20) eine Teillänge von 1,5 mm oder weniger zwischen dem Kernvorderende (P1) und dem weichen Vorderende (P2) hat.

4. Interdentale Reinigungsvorrichtung nach einem der Ansprüche 1 bis 3, wobei der weiche Abschnitt (20) ein Elastomer mit einer Shore-Härte von A30 bis A50 ist.

5. Interdentale Reinigungsvorrichtung nach einem der Ansprüche 1 bis 4, wobei ein Verhältnis der Teillänge des weichen Abschnitts (20) zwischen dem Kernvorderende (P1) und dem weichen Vorderende (P2) zu einer Dicke des weichen Abschnitts (20) an dem Kernvorderende (P1) in einem Bereich von 0,5 bis 2,5 ist.

6. Interdentale Reinigungsvorrichtung nach Anspruch 5, wobei das Verhältnis der Teillänge des weichen Abschnitts (20) zwischen dem Kernvorderende (P1) und dem weichen Vorderende (P2) zu der Dicke des weichen Abschnitts (20) an dem Kernvorderende (P1) in einem Bereich von 0,7 bis 2,1 ist.

7. Interdentale Reinigungsvorrichtung nach einem der Ansprüche 1 bis 6, ferner aufweisend einen Griffabschnitt (3), der mit einem hinteren Ende des Kernabschnitts (12) verbunden ist und eine flache Plattengestalt hat, wobei
von den Vorsprüngen (21a, 21x) ein Vorsprung an einer Position, die dem weichen Vorderende (P2) am nächsten ist, in eine Richtung vorsteht, die eine Axialrichtung des Kernabschnitts (12) kreuzt und entlang einer in der Ebene des Griffabschnitts (3) gelegenen Richtung ist.

## Revendications

1. Dispositif de nettoyage interdentaire (1) destiné à être inséré dans un espace interdentaire pour nettoyer l'espace interdentaire, le dispositif de nettoyage interdentaire (1) comprenant:
une partie centrale en forme de tige (12); et
une partie souple moulée (20) plus souple que la partie centrale (12) et recouvrant une surface extérieure d'au moins une partie de la partie centrale (12), la partie incluant une extrémité avant centrale (P1) en tant qu'extrémité avant longitudinale de la partie centrale (P1), dans lequel
la partie souple (20) a une longueur partielle de 0,5 mm ou plus et de 2,0 mm ou moins entre l'extrémité avant centrale (P1) et une extrémité avant souple (P2) en tant qu'extrémité avant longitudinale de la partie souple (20),
la partie souple (20) a une pluralité de saillies (21a, 21x) qui sont formées pour faire saillie dans des directions croisant une direction axiale de la partie centrale (12),
au moins l'une des saillies (21a, 21x) est formée dans une région entre l'extrémité avant centrale (P1) et l'extrémité avant souple (P2), et
une distance longitudinale entre l'extrémité avant souple (P2) et une extrémité arrière de jonction (212) de la saillie (21a) à une position la plus proche de l'extrémité avant souple (P2) est égale ou inférieure à la longueur entre l'extrémité avant centrale (P1) et l'extrémité avant souple (P2).

2. Dispositif de nettoyage interdentaire selon la revendication 1, dans lequel la partie souple (20) a une longueur partielle de 0,7 mm ou plus entre l'extrémité avant centrale (P1) et l'extrémité avant souple (P2).

3. Dispositif de nettoyage interdentaire selon l'une quelconque des revendications 1 à 2, dans lequel la partie souple (20) a une longueur partielle de 1,5 mm ou moins entre l'extrémité avant centrale (P1) et l'extrémité avant souple (P2).

4. Dispositif de nettoyage interdentaire selon l'une quelconque des revendications 1 à 3, dans lequel la partie souple (20) est un élastomère ayant une dureté Shore de A30 à A50.

5. Dispositif de nettoyage interdentaire selon l'une quelconque des revendications 1 à 4, dans lequel un rapport de la longueur partielle de la partie souple (20) entre l'extrémité avant centrale (P1) et l'extrémité avant souple (P2) à une épaisseur de la partie souple (20) à l'extrémité avant centrale (P1) est dans une plage de 0,5 à 2,5.

6. Dispositif de nettoyage interdentaire selon la revendication 5, dans lequel le rapport de la longueur partielle de la partie souple (20) entre l'extrémité avant centrale (P1) et l'extrémité avant souple (P2) à l'épaisseur de la partie souple (20) à l'extrémité avant centrale (P1) est dans une plage de 0,7 à 2,1.

7. Dispositif de nettoyage interdentaire selon l'une quelconque des revendications 1 à 6, comprenant en outre une partie poignée (3) qui est reliée à une extrémité arrière de la partie centrale (12) et ayant une forme de plaque plate, dans lequel
parmi les saillies (21a, 21x), une saillie à une position la plus proche de l'extrémité avant souple (P2) fait saillie dans une direction croisant une direction axiale de la partie centrale (12) et étant le long d'une direction dans le plan de la partie poignée (3).
